Europäisches Patentamt

European Patent Office

Office européen des brevets

(11) Publication number: **0 131 555**
A1

# EUROPEAN PATENT APPLICATION

(21) Application number: 84830210.5

(22) Date of filing: 06.07.84

(51) Int. Cl.⁴: **B 65 G 61/00**
**B 65 G 57/22**

(30) Priority: 11.07.83 IT 4866383

(43) Date of publication of application:
16.01.85 Bulletin 85/3

(84) Designated Contracting States:
AT BE CH DE FR GB LI LU NL SE

(71) Applicant: CF di CONCETTI TEODORO & GIUSEPPE
s.n.c.
Via degli Olmi 13 23, Zona Industriale
I-06083 Bastia Umbra (Perugia)(IT)

(72) Inventor: Concetti, Teodoro
Via G. Carducci
I-06083 Bastia Umbra (Pg)(IT)

(74) Representative: Tonon, Gilberto et al,
c/o Società Italiana Brevetti Piazza Poli 42
I-00187 Roma(IT)

(54) Palletizer for articles, in particular containers such as bags and the like.

(57) A palletizer for articles comprises a variable inclination conveyor belt (1) capable of feeding said articles onto an adjustable height roller plane (3), from which they are removed individually by a clamp assembly (16) which by means of geared motors and guides is moveable along three directions orthogonal to one another, two horizontal and one vertical, and may be rotated about its own vertical axis, to be loaded in an ordered fashion in several layers on a pallet (47) which automatically slides on suitable roller planes (25,26,27) from a storage position (45) to a loading position (26) and from the latter to a delivering position.

FIG.1

cf di Concetti Teodoro & Giuseppe s.n.c.

Palletizer for articles, in particular containers
such as bags and the like.

A system still in wide use today for loading
articles on conventional pallets, is the manual one,
which leads to burdensome waste of time as well as
high labor costs.

There are also known palletizer systems which, without
going into detail about their operation, have the
disadvantage of no versatility since they are limited
exclusively to loading bags to be arranged in several
layers on a pallet.

The object of the present invention is to provide a
palletizer which unlike similar conventional systems,
shows a great utilisation versatility in loading
articles in a completely automatic way, particularly
containers of various types, including bags, in an
orderly arrangement in several layers on any type of
pallet.

The invention is better illustrated below in the
description of a preferred embodiment thereof, shown
in an exemplifying and non-limiting way, with
reference to the attached drawings, in which:

figure 1 is a front elevation view of the palletizer
according to the invention;

figure 2 is a plan top view of the palletizer in figure 1;

figure 3 is an end elevation view of the palletizer in figure 1, with some parts cut away;

figure 4 is a schematic front view of the clamp assembly of the palletizer in figure 1;

figure 5 is a schematic view of the transmission system for opening and closing the clamp assembly in figure 4;

figure 6 is a schematic end view of the clamp assembly in figure 4 in the closed position, with some parts cut away; and

figure 7 is a view similar to that in figure 6, but with the clamp assembly in the open position.

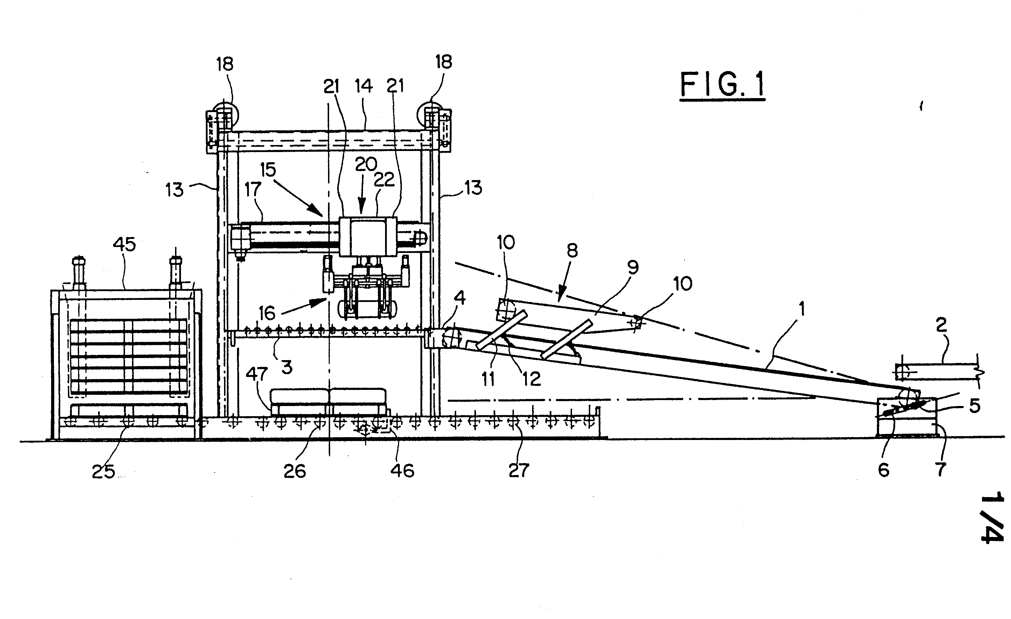

Considering that the palletizer illustrated in this embodiment in particular relates to the loading of bags, reference is made to figures 1 to 3, in which a variable inclination conveyor belt is designated with 1, for transporting bags, which fall onto it from the output end of a conveyor belt 2 for the bag filling line, to a roller plane 3 for receiving the bags.

The upper end of conveyor belt 1 is engaged in a rotating way with two brackets 4 each integral with a side of the input end of roller plane 3, while the lower end of conveyor belt 1 is provided on each side with a pin 5, which can rotate and slide in an inclined slot 6 made in the respective side supports 7 fixed to the ground.

A bag pressing device, indicated generically with 8, is associated with conveyor belt 1, comprising an endless belt 9 rotating around two end rollers 10 supported by two pairs of arms 11 pivoted at the ends and continuously pulled by respective springs 12 so that belt 9 is pushed towards the belt 1.

The roller plane 3 is cantilevered so as to slide vertically on two upstanding posts 13 connected at the top by a crosspiece 14, and it is joined in a parallel and spaced relationship with a support and guide assembly indicated generically with 15 for a clamp assembly indicated generically with 16, to be described in detail below, for moving the latter along three orthogonal axes, two horizontal and one vertical.

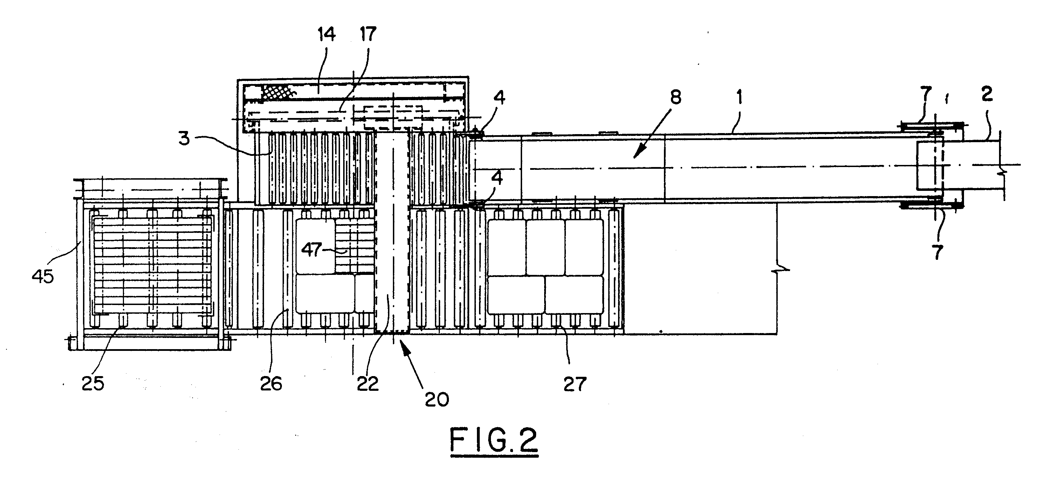

In particular, the support and guide assembly 15 for the clamp assembly 16 comprises: a first horizontal bar 17 which can slide vertically along the posts 13, jointly with the roller plane 3, by means of two geared motors 18, each mounted on the upper end of a post 13, by means of respective chain, belt or like drives 19; a second bar indicated generically with 20 (see in particular figure 2), also horizontal and perpendicular to the first bar 17, from the base of which, in sliding engagement with the first bar 17 through a transversal opening thereof, two parallel and spaced cantilever wings 21 extend forwards, connected by an upper plane 22, between which a carriage 23 supporting the clamp assembly 16 slides, driven by a geared motor (not shown) by means of a chain, belt or like drive 24 (see figure 2). From the above it results that the clamp assembly 16 may be moved in a first horizontal direction as the second bar 20 slides along the first bar 17, in a second horizontal direction perpendicular to the first as the carriage 23 slides along the wings 21 of the second bar 20, and in a vertical direction as the first bar 17 slides, with consequent analogous movement of the second bar 20 associated with it along the posts 13.

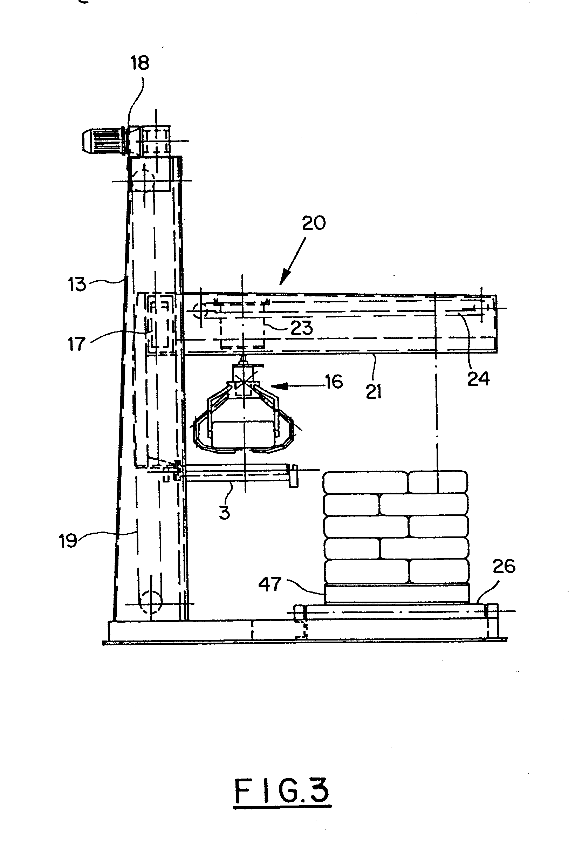

On the base plane of the apparatus in question, along a strip corresponding in width to the distance between the free ends of the roller plane 3 and the second bar 20, as shown better in figures 2 and 3, there is a roller corridor for sliding the pallets, comprising a first roller plane 25 for feeding the empty pallets, stacked in a suitable connected feeding store 45 conventional in structure and operation, a second roller plane 26 for loading the pallets, and a third roller plane 27 for delivering the loaded pallets, from which they are picked up for subsequent forwarding, for example by means of conventional fork lifting trucks.

It should be noted that a retractable stop 46 is arranged on the loading roller plane 26, which when in the raised position holds the empty pallet 47 from the feeding store 45 in the correct loading position, and when in the lowered position allows the loaded

- 5 -                      0131555

pallet 47 to be passed to the subsequent delivering roller plane 27.

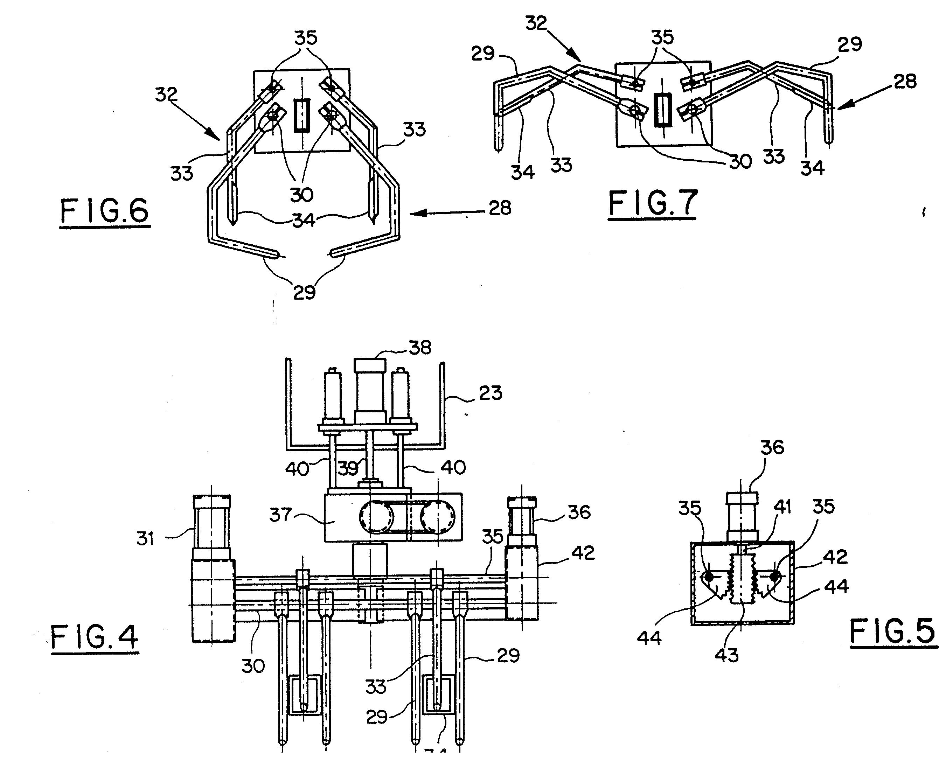

Examining now in detail the clamp assembly 16 of the palletizer according to the present invention, reference is made to the substantially schematic view in figures 4 to 7, in which four parallel and spaced grasping clamps are indicated generically with 28, each formed by two hook arms 29 keyed at an end on respective shafts 30 which can be rotated by a pneumatic cylinder 31 as described below, while two parallel and spaced guide clamps are indicated generically with 32, each placed between respective pairs of grasping clamps 28 and formed by two straight arms 33, produced with flaps 34 on the free end, and keyed at the end of a bent terminal section to respective shafts 35, which can be rotated by a pneumatic cylinder 36 in the same way as the shafts 30, to be specified below.

The group of components described above can be rotated, in one direction and the other, about its vertical axis by means of a rotating joint which connects it to a geared motor 37, and can also be adjusted in height by means of a pneumatic cylinder 38, supported inside carriage 23, the cylinder rod 39 of which has the free end connected to the case of said geared motor 37, along with the lower ends of two guide rods 40.

It should be noted here that while in figure 6 the closed position of the guide clamps 32 is shown with the arms 34 substantially vertical, they may also be arranged in a convergent or divergent position to accommodate to differently sized objects to be grasped.

Figure 5 shows schematically the system used in the apparatus in question for rotating the shafts 30 and 35 so as to open and close the bag grasping and guiding clamps 28 and 32 respectively, clarifying that, although this figure refers to the mechanism for rotating the pair of shafts 35 relative to the arms 33 of guide clamps 32, what will be stated also applies to the pair of shafts 30 of the grasping clamps 28.

Piston rod 41 of pneumatic cylinder 36, extending into the gear box 42, is connected to a rack 43 provided with two opposite toothings, to each of which a sector gear 44 is engaged, on which one end of a respective shaft 35 is keyed.

From the arrangement described above it is obvious that extraction and retraction of rod 41 imparts translational motion to rack 43, which is transformed into rotary motion of the shafts 35 by means of rotation of sector gears 44.

The operation of the apparatus in question will be briefly discussed below, without however going into detail about the movements pertaining to the relative driving means of the components already pointed out in the above description.

Each of the bags which comes onto the roller plane 3 by means of conveyor belt 1, after having been compressed by the pressing device 8, is taken from underneath by the four grasping clamps 28 which penetrate between the rollers of the roller plane 3, is pressed between the two guide clamps 32, and is then raised from the roller plane 3 itself to be deposited, by shifting the clamp assembly 16 in said two horizontal orthogonal positions and also by suitably rotating it about its own vertical axis, in the correct position on the pallet 47 which is placed on the loading roller plane 26, thus forming by successive operations a first layer of orderly arranged bags, said deposition occurring as the grasping clamps 28 are opened while the guide clamps 32 remain in a closed position to direct the fall of the bag from the clamp assembly 16 on the pallet 47, then opening after the bag is discharged. After the first layer of bags is formed, the roller plane 3 moves up, sliding along the posts 13, along with the output end of the conveyor belt 1 connected thereto in a rotating way and along with the support and guide assembly 15 of the clamp assembly 16 connected thereto, so that a second layer of bags may be formed in the same manner as described previously, and so on until loading is complete, after which the loaded pallet 47 is shifted onto the delivering roller plane 27 to be removed (see figure 2).

All the movements of the components, described above, of the palletizer according to the present invention for orderly formation of the layers of bags and for displacement of the pallets are automatically and synchronously controlled by means of a microprocessor electronic panel.

Even though in the above described embodiment the articles to be loaded onto the pallets are always in the form of bags, it is clear, as mentioned at the beginning, that said articles may be of any type, for example(in the field of containers) cases, boxes, drums, various packages, etc.

The present invention is not limited to the example described above, but includes any variant.

Claims

1. Palletizer for articles, in particular containers such as bags and the like, comprising: a variable inclination conveyor belt; a roller plane for receiving the articles to be loaded, in communication with said conveyor belt, provided with moving and guiding means in the vertical direction; a clamp assembly, associated with support and guide means for movement along three mutually orthogonal axes, two horizontal and one vertical, and with means for rotation about its own vertical axis, to grasp said articles one by one and deposit them in a guided way according to an orderly arrangement of several layers on a conventional pallet.

2. Palletizer according to claim 1, wherein said moving and guiding means in the vertical direction for said receiving roller plane comprise two parallel and spaced posts with which the respective ends of the rear side of said roller plane, extending forwards in a cantilever way, are in sliding engagement, and two geared motors, each mounted on the upper end of one of the said posts, for moving said roller plane in a vertical direction by means of suitable driving means.

3. Palletizer according to claims 1 and 2, wherein said clamp assembly comprises: several grasping clamps and several guide clamps for the article to be loaded, each formed by two arms shaped appropriately for their function; two first rotating shafts on which respective arms of said grasping clamps are keyed, and two second rotation shafts on which respective arms of said guide clamps are keyed; means for rotating in one direction and in the opposite direction said first and second rotation shafts.

4. Palletizer according to claim 3, wherein said means for rotating in one direction and in the opposite direction said first and second rotation shafts comprise for each pair of shafts a pneumatic cylinder the ~~piston rod of which is joined to a rack provided with~~ two opposite toothings, to each of which a sector gear is engaged with which an end of a respective shaft of said pair is connected.

5. Palletizer according to any of the preceding claims, wherein said support and guide means for said clamp assembly comprise: a first horizontal bar connected in a parallel and spaced relationship to said receiving roller plane and having the ends in sliding engagement with said two posts; a second bar having one end in sliding engagement with said first bar and cantilevered perpendicularly to said first bar and parallelly to said roller plane; a support carriage for said clamp assembly, sliding along said second bar and provided with means for lifting and lowering said clamp assembly.

6. Palletizer according to claim 5, wherein said means associated with said carriage for lifting and lowering said clamp assembly comprise a pneumatic cylinder, placed inside said support carriage, the piston rod of which is connected to said clamp assembly.

7. Palletizer according to any of the preceding claims, wherein said means for rotating said clamp assembly about its own vertical axis comprise a rotating joint axially connected to said clamp assembly and connected to a geared motor.

8. Palletizer according to any of the preceding claims, wherein on the base plane along the corridor for pallet movement there are in succession a first feeding roller plane for empty pallets at a suitable feeding store, a second loading roller plane in front of said receiving roller plane, provided with a retractable stop for blocking the pallet coming from said feeding roller plane in the intended loading position, and a third roller plane for delivering the loaded pallets.

9. Palletizer according to any of the preceding claims, wherein a microprocessor electronic panel is provided for the automatic and synchronized control of the movements of the components claimed in the preceding claims.

10. Palletizer for objects, in particular containers such as bags and the like, substantially as described above with reference to the attached drawings.

## FIG.1

FIG.2

F I G.3

0131555

4/4

FIG.4
FIG.5
FIG.6
FIG.7

**European Patent Office**

**0131555**

. Application number

# EUROPEAN SEARCH REPORT

| | DOCUMENTS CONSIDERED TO BE RELEVANT | | EP 84830210.5 |
|---|---|---|---|
| Category | Citation of document with indication, where appropriate, of relevant passages | Relevant to claim | CLASSIFICATION OF THE APPLICATION (Int. Cl.4) |
| Y | DE - A1 - 2 727 166 (KETTNER) | 1,5 | B 65 G 61/00 |
| A | * Totaltiy * | 2,3,4, 6,8 | B 65 G 57/22 |
| | -- | | |
| Y | FR - A1 - 2 454 987 (AUTOMAN SARL) | 1,5 | |
| A | * Totality * | 3,7 | |
| | -- | | |
| A | DE - A1 - 2 545 186 (BRAUEREI-MASCHINENFABRIK MAX KETTNER) * Totality * | 1,2,5 | |
| | -- | | |
| A | DE - A1 - 3 217 914 (OKURA YUSOKI K.K.) * Totality * | 1,3,5 | |
| | -- | | TECHNICAL FIELDS SEARCHED (Int. Cl.4) |
| A | CH - A5 - 577 423 (ETABLISSEMENTS BALBINOT) * Totality * | 1,6,8,9 | B 65 G B 65 B 35/00 |
| | -- | | |
| A | US - A - 4 316 354 (LOEWENTHAL) * Fig. 4 * | 1,3 | |
| | ---- | | |

The present search report has been drawn up for all claims

| Place of search VIENNA | Date of completion of the search 16-10-1984 | Examiner PISSENBERGER |
|---|---|---|